# EUROPEAN PATENT APPLICATION

(11) **EP 4 481 903 A1**
(43) Date of publication of application: **25.12.2024**
(21) Application number: 24178504.7
(22) Date of filing: 28.05.2024
(51) Int. Cl.: H01M 50/105, H01M 50/124, H01M 50/136, H01M 50/184, H01M 50/186, H01M 10/34

(54) **LAMINATED BATTERY AND METHOD OF MANUFACTURING LAMINATED BATTERY**

(30) Priority: 02.06.2023 JP 2023091960
(71) Applicant: TOYOTA JIDOSHA KABUSHIKI KAISHA, Aichi-ken 471-8571 (JP)
(72) Inventor: KURASHITA, Nana, Toyota-shi, 471-8571 (JP); KAKISHITA, Kenichi, Toyota-shi, 471-8571 (JP)
(74) Representative: J A Kemp LLP

(57) **Abstract**

A laminated battery includes an electrode body and a laminate film that covers and seals the electrode body inside. The laminate film has a fused portion formed by superposing end portions of the laminate film and fusing together their inner surfaces. The fused portion has three or more bend portions including two or more fold portions that are bent in angular or arcuate shapes so as to have an angle of 90° or less and one distal end-side bend portion that is bent in an angular or arcuate shape so as to have an angle less than 180° in a position closest to a distal end of the fused portion . The fused portion has a shape in which at least part of the distal end faces the electrode body side.

## Description

### BACKGROUND

### Technical Field

The present disclosure relates to a laminated battery and a method of manufacturing the laminated battery.

### Related Art

In a laminated battery where an electrode body is covered by a laminate film, part of the laminate film is fused to form a fused portion in order to seal the electrode body.

For example, Japanese Patent Application Laid-open (JP-A) No. 2019-200973 discloses a method of manufacturing a secondary battery having a fold portion in at least one end portion of a laminated outer package, the method including: a step of bringing a restraining plate into abutting contact with a folding origin of the end portion of the outer package; and, after the abutting contact step, a step of sliding a pushing plate disposed in a position opposing the restraining plate against the end portion so as to sandwich the end portion between the pushing plate and the restraining plate, thereby folding the end portion about the origin and holding the end portion between the restraining plate and the pushing plate to form the fold portion, wherein the surface of the pushing plate that slides against the end portion has an inclined surface that bends the end portion and a holding surface that holds the end portion, the inclined surface is inclined so that, in a cross-section orthogonal to a width direction of the pushing plate, the cross-sectional area of the pushing plate narrows in the sliding direction, and the inclined surface is inclined in the width direction.

### SUMMARY

In a laminated battery where the electrode body is covered by one laminate film, the electrode body is sealed by the laminate film by superposing one end side and the other end side of the laminate film and fusing together their inner surfaces to form the fused portion. Furthermore, in a laminated battery where the electrode body is covered by plural laminate films, sealing is performed by superposing end portions of the plural laminate films and fusing together their inner surfaces to form the fused portion. It will be noted that in order to improve the structural efficiency of the laminated battery, these fused portions are, for example, folded to reduce the size of the outer shape of the entire laminated battery.

Here, if the electrode body included in the laminated battery sustains an impact, sometimes the electrode body sustains damage and becomes unable to exhibit the required battery performance. For that reason, laminated batteries need to have impact resistance, and there has also been a demand to enhance the impact resistance of the fused portion of the laminate film to impacts from the outside.

The present disclosure has been made in view of the aforementioned circumstances, and it is an object thereof to provide a laminated battery in which the fused portion has superior impact resistance to impacts from the outside and a method of manufacturing the laminated battery.

A laminated battery of a first aspect of the present disclosure including:
an electrode body; and
a laminate film that covers and seals the electrode body inside,
wherein
the laminate film has a fused portion formed by superposing end portions of the laminate film and fusing together their inner surfaces,
the fused portion has three or more bend portions including two or more fold portions that are bent in angular or arcuate shapes so as to have an angle of 90° or less and one distal end-side bend portion that is bent in an angular or arcuate shape so as to have an angle less than 180° in a position closest to a distal end of the fused portion, and
the fused portion has a shape in which at least part of the distal end faces the electrode body side.

A laminated battery of a second aspect according to the present disclosure is the laminated battery of the first aspect, wherein the fold portions and the distal end-side bend portion are all bent in arcuate shapes.

A laminated battery of a third aspect according to the present disclosure is the laminated battery of the first aspect or the second aspect, wherein the position in which the distal end-side bend portion is disposed is a position closest to the bend portion that is most on a base side of the fused portion among the two or more fold portions.

A laminated battery of a fourth aspect according to the present disclosure is the laminated battery of any one of the first aspect to the third aspect, wherein the fused portion has, as the fold portions, one or more right-angle bend portions that are bent in angular or arcuate shapes so as to have an angle of 70° to 90° and one folded-back bend portion that is bent in an angular or arcuate shape so as to have an angle of 20° or less.

A laminated battery of a fifth aspect according to the present disclosure is the laminated battery of any one of the first aspect to the fourth aspect, wherein the shortest distance between the distal end of the fused portion and the area of the laminate film covering the electrode body is 0.5 mm to 5 mm.

A method of manufacturing a laminated battery of a sixth aspect according to the present disclosure is a method of manufacturing the laminated battery of the fifth aspect including:
a step of preparing a post-fusion laminated battery having a planar fused portion formed by superposing end portions of a laminate film and fusing together their inner surfaces;
a folding back and bending step of forming, in the fused portion of the post-fusion laminated battery, a folded-back bend portion that is bent in an angular or arcuate shape so as to have an angle of 20° or less; and
a right-angle bending step of forming, in an area on a base side of the fused portion relative to the folded-back bend portion, a right-angle bend portion that is bent in an angular or arcuate shape so as to have an angle of 70° to 90°,
wherein
the right-angle bending step is a step of folding the fused portion in stages to form the right-angle bend portion by conveying the fused portion between roller pairs of a roller pair group including at least three fold rollers that contact a surface on a folding side of the fused portion and have different contact angles relative to the fused portion and opposing rollers that are provided in positions opposing the fold rollers via the fused portion and are present in the same number as the fold rollers, and
the right-angle bending step is a step of forming the distal end-side bend portion by causing at least one of the fold rollers in the roller pair group to contact an area on the distal end side of the fused portion relative to the folded-back bend portion.

According to the present disclosure, there can be provided a laminated battery in which the fused portion has superior impact resistance to impacts from the outside and a method of manufacturing the laminated battery.

### BRIEF DESCRIPTION OF THE DRAWINGS

FIG 1 is a schematic cross-sectional view exemplifying a laminated battery pertaining to an embodiment;
FIG 2 is a schematic cross-sectional view exemplifying a laminated battery pertaining to another aspect of the embodiment;
FIG 3 is a schematic cross-sectional view exemplifying a laminated battery pertaining to another aspect of the embodiment;
FIG 4 is a schematic cross-sectional view exemplifying a laminated battery pertaining to another aspect of the embodiment; and
FIG 5 is a schematic cross-sectional view showing an example of a solid-state battery.

### DETAILED DESCRIPTION

### <Laminated Battery>

A laminated battery pertaining to an embodiment of the disclosure includes an electrode body and a laminate film that covers and seals the electrode body inside, wherein the laminate film has a fused portion formed by superposing end portions of the laminate film and fusing together their inner surfaces, the fused portion has three or more bend portions including two or more fold portions that are bent in angular or arcuate shapes so as to have an angle of 90° or less and one distal end-side bend portion that is bent in an angular or arcuate shape so as to have an angle less than 180° in a position closest to a distal end of the fused portion, and the fused portion has a shape in which at least part of the distal end faces the electrode body side.

Because at least part of the distal end of the fused portion faces the electrode body side, even if the fused portion sustains an impact from the outside, the distal end portion first hits the electrode body side (the laminate film covering the electrode body) and is stopped, so that even if the fused portion again sustains an impact from the outside thereafter, the fused portion is unlikely to deform. Because of this, the impact resistance of the fused portion is improved and, as a result, damage to the electrode body can be inhibited.

An embodiment of the laminated battery pertaining to the present disclosure will be described below using the drawings.

Each of the drawings described below is schematically illustrative, and sizes and shapes of parts in the drawings are exaggerated as appropriate to facilitate understanding.

### (First Aspect)

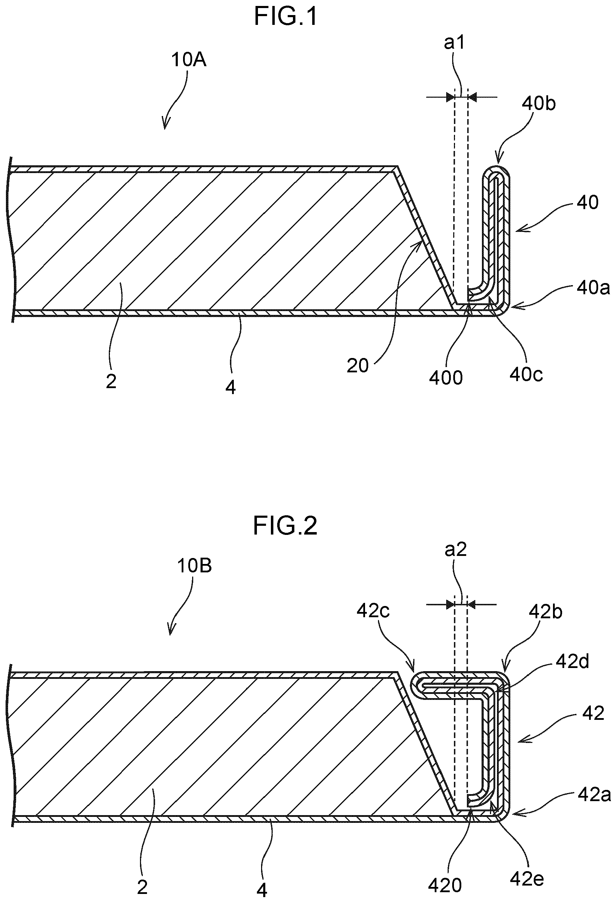

FIG 1 is a schematic cross-sectional view exemplifying the laminated battery pertaining to the embodiment.

A laminated battery 10A includes an electrode body 2 and a laminate film 4 that covers and seals the electrode body 2 inside. The laminate film 4 has a fused portion 40 formed by superposing one end side and the other end side of the laminate film 4 and fusing together their inner surfaces. The electrode body 2 has a shape in which an end face 20 thereof (FIG 1 shows the end face on the side where the fused portion 40 is formed) is an inclined surface. The fused portion 40 is formed heading outward from the end portion on the side of the inclined surface of the end face 20 of the electrode body 2 that juts further outward (the end portion on the lower side of the end face 20 in FIG 1). The fused portion 40 has, from a base side of the fused portion 40 (i.e., a position closest to the electrode body 2) to a distal end 400 side, a total of three bend portions including a right-angle bend portion 40a that is bent in an arcuate shape so as to have an angle of substantially 90°, a folded-back bend portion 40b that is bent in an arcuate shape so as to have an angle of substantially 0°, and a distal end-side bend portion 40c that is bent in an arcuate shape so as to have an angle of substantially 90° in a position closest to the distal end 400 of the fused portion 40. The distal end-side bend portion 40c is disposed in a position closest to the right-angle bend portion 40a, which corresponds to the bend portion most on the base side of the fused portion 40, among all the remaining the bend portions (i.e., the right-angle bend portion 40a and the folded-back bend portion 40b).

Here, the "angles" of the fused portion in the present disclosure are the angles in the smallest corners formed by the fused portion on both sides of the bend portions.

The fused portion 40 has a shape in which the distal end 400 faces the electrode body 2 side. The fused portion 40 shown in FIG 1 has a shape in which the entire area of the distal end 400 in the lengthwise direction of the fused portion 40 (the depth direction in FIG 1) faces the electrode body 2 side.

Here, what is meant by the fused portion having a shape in which the distal end faces the electrode body side is that the distal end of the fused portion is disposed in a position closer to the electrode body than the distal end-side bend portion is.

In this way, the laminated battery 10A shown in FIG 1 has a shape in which the distal end 400 faces the electrode body 2 side. Suppose that the fused portion 40 sustains an impact from the outside; for example, suppose that the fused portion 40 sustains an impact from the direction of the right side in FIG 1. In such an event, the fused portion 40 deforms starting at the right-angle bend portion 40a, and the distal end portion 400 initially hits the electrode body 2 side (the laminate film 4 covering the electrode body 2) and is stopped. Thereafter, even if the fused portion 40 continues to sustain impacts from the outside (e.g., from the direction of the right side in FIG 1), the fused portion 40 is unlikely to deform because the distal end portion 400 is in contact with the electrode body 2 side. Because of this, the impact resistance of the fused portion 40 is improved and, as a result, the electrode body 2 can be inhibited from sustaining damage from impacts to the fused portion 40.

It will be noted that although FIG 1 shows an aspect where the fused portion 40 has three bend portions that are bent in arcuate shapes, the bend portions may also be bent in angular shapes, i.e., shapes that have corners.

Furthermore, although FIG 1 shows an aspect where the fused portion 40 has a shape in which the entire area of the distal end 400 in the lengthwise direction of the fused portion 40 faces the electrode body 2 side, the fused portion need only have a shape in which at least part of the distal end faces the electrode body side. When the fused portion has a shape in which at least part of the distal end of the fused portion faces the electrode body side, even if the fused portion sustains an impact from the outside, the part of the distal end portion facing the electrode body side first hits the electrode body side and is stopped, so the impact resistance of the fused portion is improved, and damage to the electrode body can be inhibited.

It will be noted that in the laminated battery pertaining to the embodiment of the present disclosure, the fused portion need only have three or more bend portions including two or more fold portions that are bent in angular or arcuate shapes so as to have an angle of 90° or less and one distal end-side bend portion that is bent in an angular or arcuate shape so as to have an angle less than 180° in a position closest to the distal end of the fused portion. From the standpoint of improving the structural efficiency of the fused portion, it is preferred that the fused portion have, as the fold portions, one or more right-angle bend portions that are bent in angular or arcuate shapes so as to have an angle of 70° to 90° and one folded-back bend portion that is bent in an angular or arcuate shape so as to have an angle of 20° or less.

### (Second Aspect)

FIG 2 is a schematic cross-sectional view exemplifying a laminated battery pertaining to another aspect of the embodiment.

A laminated battery 10B includes an electrode body 2 and a laminate film 4 that covers and seals the electrode body 2 inside. The laminate film 4 has a fused portion 42 formed by superposing one end side and the other end side of the laminate film 4 and fusing together their inner surfaces. The fused portion 42 has, from a base side of the fused portion 42 (i.e., a position closest to the electrode body 2) to a distal end 420 side, a total of five bend portions including a right-angle bend portion 42a that is bent in an arcuate shape so as to have an angle of substantially 90°, a right-angle bend portion 42b that is bent in an arcuate shape so as to have an angle of substantially 90°, a folded-back bend portion 42c that is bent in an arcuate shape so as to have an angle of substantially 0°, a right-angle bend portion 42d that is bent in an arcuate shape so as to have an angle of substantially 90°, and a distal end-side bend portion 40e that is bent in an arcuate shape so as to have an angle of substantially 90° in a position closest to the distal end 420 of the fused portion 42. The distal end-side bend portion 42e is disposed in a position closest to the right-angle bend portion 42a, which corresponds to the bend portion most on the base side of the fused portion 42, among all the remaining bend portions (i.e., the right-angle bend portions 42a, 42b, 42d and the folded-back bend portion 42c).

The fused portion 42 has a shape in which the distal end 420 faces the electrode body 2 side. That is, the distal end 420 of the fused portion 42 is disposed in a position closer to the electrode body 2 than the distal end-side bend portion 42e is. The fused portion 42 shown in FIG 2 has a shape in which the entire area of the distal end 420 in the lengthwise direction of the fused portion 42 (the depth direction in FIG 2) faces the electrode body 2 side.

In this way, the laminated battery 10B shown in FIG 2 has a shape in which the distal end 420 faces the electrode body 2 side. Suppose that the fused portion 42 sustains an impact from the outside; for example, suppose that the fused portion 42 sustains an impact from the direction of the right side in FIG 2. In such an event, the fused portion 42 deforms starting at the right-angle bend portion 42a, and the folded-back bend portion 42c initially hits the electrode body 2 side (the laminate film 4 covering the electrode body 2). However, the folded-back bend portion 42c that has contacted the electrode body 2 side is likely to slide and shift (shift in the upward direction in FIG 2) as a result of continuing to sustain impacts. Thereafter, if the fused portion 42 continues to sustain impacts, the distal end portion 420 next hits the electrode body 2 side (the laminate film 4 covering the electrode body 2) and is stopped. Thereafter, even if the fused portion 42 continues to sustain impacts from the outside (e.g., from the direction of the right side in FIG 2), the fused portion 42 is unlikely to deform because the distal end portion 420 is in contact with the electrode body 2 side. Because of this, the impact resistance of the fused portion 42 is improved and, as a result, the electrode body 2 can be inhibited from sustaining damage from impacts to the fused portion 42.

It will be noted that although FIG 2 shows an aspect where the fused portion 42 has five bend portions that are bent in arcuate shapes, the bend portions may also be bent in angular shapes, i.e., shapes that have corners.

Furthermore, although FIG 2 shows an aspect where the fused portion 42 has a shape in which the entire area of the distal end 420 in the lengthwise direction of the fused portion 42 faces the electrode body 2 side, the fused portion need only have a shape in which at least part of the distal end faces the electrode body side.

### (Third Aspect)

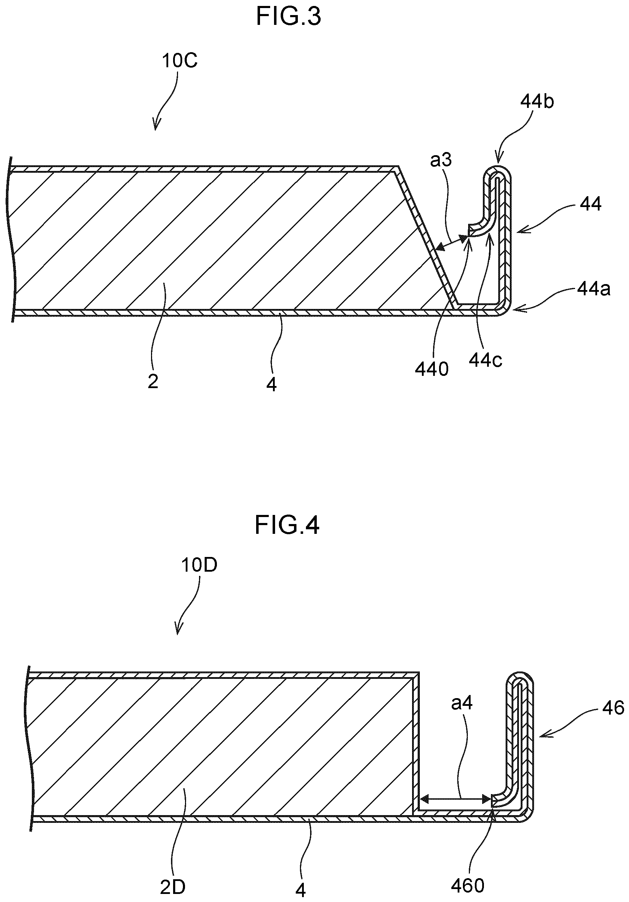

FIG 3 is a schematic cross-sectional view exemplifying a laminated battery pertaining to another aspect of the embodiment.

A laminated battery 10C includes an electrode body 2 and a laminate film 4 that covers and seals the electrode body 2 inside. The laminate film 4 has a fused portion 44 formed by superposing one end side and the other end side of the laminate film 4 and fusing together their inner surfaces. The fused portion 44 has, from a base side of the fused portion 44 (i.e., a position closest to the electrode body 2) to a distal end 440 side, a total of three bend portions including a right-angle bend portion 44a that is bent in an arcuate shape so as to have an angle of substantially 90°, a folded-back bend portion 44b that is bent in an arcuate shape so as to have an angle of substantially 0°, and a distal end-side bend portion 44c that is bent in an arcuate shape so as to have an angle of substantially 90° in a position closest to the distal end 440 of the fused portion 44.

It will be noted that the distal end-side bend portion 44c is disposed in a position closest to the folded-back bend portion 44b, which does not correspond to the bend portion most on the base side of the fused portion 44, among all the remaining bend portions (i.e., the right-angle bend portion 44a and the folded-back bend portion 44b).

The fused portion 44 has a shape in which the distal end 440 faces the electrode body 2 side. That is, the distal end 440 of the fused portion 44 is disposed in a position closer to the electrode body 2 than the distal end-side bend portion 44c is. The fused portion 44 shown in FIG 3 has a shape in which the entire area of the distal end 440 in the lengthwise direction of the fused portion 44 (the depth direction in FIG 3) faces the electrode body 2 side.

In this way, the laminated battery 10C shown in FIG 3 has a shape in which the distal end 440 faces the electrode body 2 side. Suppose that the fused portion 44 sustains an impact from the outside; for example, suppose that the fused portion 44 sustains an impact from the direction of the right side in FIG 3. In such an event, the fused portion 44 deforms starting at the right-angle bend portion 44a, and the distal end portion 440 initially hits the electrode body 2 side (the laminate film 4 covering the electrode body 2) and is stopped. Thereafter, even if the fused portion 44 continues to sustain impacts from the outside (e.g., from the direction of the right side in FIG 3), the fused portion 44 is unlikely to deform because the distal end portion 440 is in contact with the electrode body 2 side. Because of this, the impact resistance of the fused portion 44 is improved and, as a result, the electrode body 2 can be inhibited from sustaining damage from impacts to the fused portion 44.

It will be noted that although FIG 3 shows an aspect where the fused portion 44 has three bend portions that are bent in arcuate shapes, the bend portions may also be bent in angular shapes, i.e., shapes that have corners.

Furthermore, although FIG 3 shows an aspect where the fused portion 44 has a shape in which the entire area of the distal end 440 in the lengthwise direction of the fused portion 44 faces the electrode body 2 side, the fused portion need only have a shape in which at least part of the distal end faces the electrode body side.

In the first to third aspects shown in FIG 1 to FIG 3, aspects where the end face of the electrode body is an inclined surface were described, but the shape of the electrode body is not limited to this. For example, as shown in FIG 4, an electrode body 2D in the shape of a rectangular cuboid can also be used.

In the laminated battery pertaining to the embodiment of the present disclosure, the fused portion has a shape in which the distal end faces the electrode body side. The shortest distance between the distal end of the fused portion and the area of the laminate film covering the electrode body is, from the standpoint of improving the impact resistance of the fused portion to impacts from the outside, preferably 0.5 mm to 5 mm and more preferably 0.5 mm to 1 mm. It will be noted that the shortest distance between the distal end of the fused portion and the area of the laminate film covering the electrode body is, for example, distance a1 in FIG 1, distance a2 in FIG 2, distance a3 in FIG 4, and distance a4 in FIG 4.

In the first to third aspects shown in FIG 1 to FIG 3, laminated batteries where the electrode body is covered by one laminate film were described. However, the present disclosure is not limited to this, and the laminated battery of the present disclosure may also be a laminated battery where the electrode body is covered by plural laminate films. For example, the laminated battery may also be a laminated battery where the electrode body is covered by two laminate films and the electrode body is sealed by superposing end portions of the two laminate films and fusing together their inner surfaces to form the fused portion.

### <Method of Manufacturing Laminated Battery>

Next, a method of manufacturing the laminated battery pertaining to the embodiment of the present disclosure will be described.

The method of manufacturing the laminated battery is a method of manufacturing a laminated battery including an electrode body and a laminate film that covers and seals the electrode body inside, the laminate film having a fused portion formed by superposing end portions of the laminate film and fusing together their inner surfaces, the fused portion having three or more bend portions including two or more fold portions that are bent in angular or arcuate shapes so as to have an angle of 90° or less and one distal end-side bend portion that is bent in an angular or arcuate shape so as to have an angle less than 180° in a position closest to a distal end of the fused portion, the fused portion having a shape in which at least part of the distal end faces the electrode body side, and the fused portion having, as the fold portions, one folded-back bend portion that is bent in an angular or arcuate shape so as to have an angle of 20° or less and one or more right-angle bend portions that are formed on a base side of the fused portion relative to the folded-back bend portion and are bent in angular or arcuate shapes so as to have an angle of 70° to 90°.

Additionally, the method includes:
a step of preparing a post-fusion laminated battery having a planar fused portion formed by superposing end portions of a laminate film and fusing together their inner surfaces;
a folding back and bending step of forming, in the fused portion of the post-fusion laminated battery, a folded-back bend portion that is bent in an angular or arcuate shape so as to have an angle of 20° or less; and
a right-angle bending step of forming, in an area on a base side of the fused portion relative to the folded-back bend portion, a right-angle bend portion that is bent in an angular or arcuate shape so as to have an angle of 70° to 90°,
wherein
the right-angle bending step is a step of folding the fused portion in stages to form the right-angle bend portion by conveying the fused portion between roller pairs of a roller pair group including at least three fold rollers that contact a surface on a folding side of the fused portion and have different contact angles relative to the fused portion and opposing rollers that are provided in positions opposing the fold rollers via the fused portion and are present in the same number as the fold rollers, and
the right-angle bending step is a step of forming the distal end-side bend portion by causing at least one of the fold rollers in the roller pair group to contact an area on the distal end side of the fused portion relative to the folded-back bend portion.

### · Example of Manufacturing Laminated Battery of First Aspect

First, a method of manufacturing the laminated battery of the first aspect shown in FIG 1 will be taken as an example and described. The right-angle bend portion 40a, the folded-back bend portion 40b, and the distal end-side bend portion 40c of the laminated battery 10A of the first aspect can, for example, be formed by performing the folding back and bending step and the right-angle bending step described below.

First, a folding operation is performed on a laminated battery having a planar fused portion 40 that has not been folded (a post-fusion laminated battery) to form the folded-back bend portion 40b (the folding back and bending step). Examples of the folding operation in the folding back and bending step include a method of folding the fused portion 40 in stages by conveying the fused portion 40 between roller pairs of a roller pair group including plural fold rollers that contact the surface on the folding side of the fused portion 40 (i.e., the valley fold side of the folded-back bend portion 40b) and have different contact angles relative to the fused portion 40 and opposing rollers that are provided in positions opposing the fold rollers via the fused portion 40 and are present in the same number as the fold rollers.

Next, a folding operation is performed on the fused portion 40 in which the folded-back bend portion 40b has been formed to form the right-angle bend portion 40a in the area on the base side of the fused portion 40 relative to the folded-back bend portion 40b (the right-angle bending step). Examples of the folding operation in the right-angle bending step include a method of folding the fused portion 40 in stages by conveying the fused portion 40 between roller pairs of a roller pair group including at least three fold rollers that contact the surface on the folding side of the fused portion 40 (i.e., the valley fold side of the right-angle bend portion 40a) and have different contact angles relative to the fused portion 40 and opposing rollers that are provided in positions opposing the fold rollers via the fused portion 40 and are present in the same number as the fold rollers.

It will be noted that in the right-angle bending step, the distal end-side bend portion 40c can also be formed by causing at least one of the fold rollers in the roller pair group to contact the area on the distal end 400 side of the fused portion 40 relative to the folded-back bend portion 40b. It will be noted that when the at least one fold roller in the roller pair group is brought into contact with the area on the distal end 400 side of the fused portion 40, the fold roller may contact the entire area of the distal end 400 in the lengthwise direction of the fused portion 40 or may contact just part of the distal end 400 of the fused portion 40.

In the right-angle bending step, by forming the right-angle bend portion 40a using the roller pair group having at least three fold rollers with different contact angles and forming the distal end-side bend portion 40c by causing at least one of the fold rollers in the roller pair group to contact the area on the distal end 400 side of the fused portion 40, the occurrence of springback in the fused portion 40 can be inhibited. Furthermore, the fused portion 40 can be given a shape in which at least part of the distal end 400 faces the electrode body 2 side, and the impact resistance of the fused portion 40 can be improved.

### · Example of Manufacturing Laminated Battery of Second Aspect

Examples of methods of manufacturing the laminated battery of the second aspect shown in FIG 2 include a method of further performing a second right-angle bending step after the folding back and bending step and before the right-angle bending step, or after the right-angle bending step, in the above example of manufacturing the laminated battery of the first aspect.

That is, the folded-back bend portion 42c is formed in the same way as in the example of manufacturing the laminated battery of the first aspect (the folding back and bending step) and then the right-angle bend portion 42a and the distal end-side bend portion 42e are formed in the same way as in the example of manufacturing the laminated battery of the first aspect (the right-angle bending step). Thereafter, the right-angle bend portions 42b and 42d are formed in the area between the folded-back bend portion 42c and the distal end-side bend portion 42e and the area between the folded-back bend portion 42c and the right-angle bend portion 42a (the second right-angle bending step). Examples of the folding operation in the second right-angle bending step include a method of folding the fused portion 42 in stages by conveying the fused portion 42 between roller pairs of a roller pair group including plural fold rollers that contact the surface on the folding side of the fused portion 42 (i.e., the valley fold side of the right-angle bend portion 42d) and have different contact angles relative to the fused portion 42 and opposing rollers that are provided in positions opposing the fold rollers via the fused portion 42 and are present in the same number as the fold rollers. It will be noted that the second right-angle bending step may also be performed after the folding back and bending step and before the right-angle bending step.

According to the example of manufacturing the laminated battery of the second aspect described above, the occurrence of springback in the fused portion 42 can be inhibited. Furthermore, the fused portion 42 can be given a shape in which at least part of the distal end 420 faces the electrode body 2 side, and the impact resistance of the fused portion 42 can be improved.

It will be noted that the method of manufacturing the laminated battery pertaining to the embodiment of the present disclosure is not limited to the above methods. For example, examples of methods of manufacturing the laminated battery of the third aspect shown in FIG 3 include a method of forming each of the right-angle bend portion 44a, the folded-back bend portion 44b, and the distal end-side bend portion 44c by separate folding steps.

### (Battery Members)

Next, the electrode body and the laminate film that configure the laminated battery pertaining to the present embodiment will be described.

### (1) Laminate Film

Examples of the laminate film include a film having a metal layer and also include a film with a three-layer structure having a resin layer on both sides of a metal layer. It will be noted that in the film with the three-layer structure, the resin layer on the inner side that becomes the electrode body side (i.e., the resin layer that becomes fused) is a fusion resin layer, and the resin layer on the outer peripheral surface side on the opposite side of the electrode body side is a protective resin layer.

Examples of materials for the fusion resin layer include olefin resins such as polypropylene (PP) and polyethylene (PE). Examples of materials for the metal layer include aluminum, aluminum alloys, and stainless steel. Examples of materials for the protective resin layer include polyethylene terephthalate (PET) and nylon. The thickness of the fusion resin layer is, for example, 40 µm to 100 µm. The thickness of the metal layer is, for example, 30 µm to 60 µm. The thickness of the protective resin layer is, for example, 20 µm to 60 µm. The thickness of the entire laminate film is, for example, 70 µm to 220 µm.

### (2) Electrode Body

The electrode body functions as the power generating element of the battery. The shape of the electrode body is not particularly limited, and examples thereof include a rectangular cuboid shape and a shape whose end faces are inclined surfaces. The electrode body normally has a positive electrode current collector, a positive electrode active material layer, an electrolyte layer, a negative electrode active material layer, and a negative electrode current collector in this order in its thickness direction.

The positive electrode active material layer at least includes a positive electrode active material. The positive electrode active material layer may further include at least one of a conductive additive, an electrolyte, and a binder. The shape of the positive electrode active material is, for example, particulate. Examples of the positive electrode active material include oxide active materials. Furthermore, sulfur (S) may be used as the positive electrode active material.

The positive electrode active material layer preferably includes a lithium complex oxide as the positive electrode active material. The lithium complex oxide may include at least one type selected from the group comprising F, Cl, N, S, Br, and I. Furthermore, the lithium complex oxide may have a crystalline structure belonging to at least one space group selected from the space groups R-3m, Immm, and P63-mmc (also called P63mc and P6/mmc). Furthermore, the main array of the transition metal, oxygen, and lithium in the lithium complex oxide may have an O2 structure.

Examples of lithium complex oxides having a crystalline structure belonging to R-3m include compounds represented by LiₓMe_{y}O_{α}X_{β} (where Me represents at least one type selected from the group comprising Mn, Co, Ni, Fe, Al, Cu, V, Nb, Mo, Ti, Cr, Zr, Zn, Na, K, Ca, Mg, Pt, Au, Ag, Ru, W, B, Si, and P, X represents at least one type selected from the group comprising F, Cl, N, S, Br, and I, and x, y, α, and β satisfy 0.5 ≤ x ≤ 1.5, 0.5 ≤ y ≤ 1.0, 1 ≤ α < 2, and 0 < β ≤ 1).

Examples of lithium complex oxides having a crystalline structure belonging to Immm include compounds represented by Liₓ₁M¹A¹₂ (where x1 satisfies 1.5 ≤ x1 ≤ 2.3, M¹ includes at least one type selected from the group comprising Ni, Co, Mn, Cu, and Fe, and A¹ at least includes oxygen, and the percentage of oxygen occupying A¹ is 85 at% or more) (a specific example is Li₂NiO₂) and compounds represented by Liₓ₁M^{1A}₁₋ₓ₂M^{1B}ₓ₂O_{2-y}A²_{y} (where 0 ≤ x2 ≤ 0.5 and 0 ≤ y ≤ 0.3 and at least one of x2 and y is not 0, M^{1A} represents at least one type selected from the group comprising Ni, Co, Mn, Cu, and Fe, M^{1B} represents at least one type selected from the group comprising Al, Mg, Sc, Ti, Cr, V, Zn, Ga, Zr, Mo, Nb, Ta, and W, and A2 represents at least one type selected from the group comprising F, Cl, Br, S, and P).

Examples of lithium complex oxides having a crystalline structure belonging to P63-mmc include compounds represented by M1ₓM2_{y}O₂ (where M1 represents an alkali metal (preferably at least one type of Na and K), M2 represents a transition metal (preferably at least one type selected from the group comprising Mn, Ni, Co, and Fe), and x + y satisfies 0 < x + y ≤ 2).

Examples of lithium complex oxides having an O2 structure include compounds represented by Liₓ[Li_{α}(MnₐCo_{b}M_{c})_{1-α}]O₂ (where 0.5 < x < 1.1, 0.1 < α < 0.33, 0.17 < a < 0.93, 0.03 < b < 0.50, 0.04 < c < 0.33, and M represents at least one type selected from the group comprising Ni, Mg, Ti, Fe, Sn, Zr, Nb, Mo, W, and Bi), and specific examples thereof include Li_{0.744}[Li_{0.145}Mn_{0.625}Co_{0.115}Ni_{0.115}]O₂.

Furthermore, the positive electrode preferably includes, in addition to the positive electrode active material, a solid electrolyte selected from a solid electrolyte group comprising sulfide solid electrolytes, oxide solid electrolytes, and halide solid electrolytes, and an aspect where at least part of the surface of the positive electrode active material is coated with a sulfide solid electrolyte, an oxide solid electrolyte, or a halide solid electrolyte is more preferred. As the halide solid electrolyte coating at least part of the surface of the positive electrode active material, Li_{6-(4-x)b}(Ti₁₋ₓAlₓ)_{b}F₆ (0 < x < 1 and 0 < b ≤ 1.5) [LTAF electrolyte] is preferred.

Examples of conductive additives include carbon materials. The electrolyte may be a solid electrolyte or a liquid electrolyte. The solid electrolyte may be an organic solid electrolyte such as a gel electrolyte or an inorganic solid electrolyte such as an oxide solid electrolyte or a sulfide solid electrolyte. Furthermore, the liquid electrolyte (electrolyte solution) includes a support salt such as LiP₆ and a solvent such as carbonate solvent. Furthermore, examples of the binder include rubber-based binders and fluoride-based binders.

The negative electrode active material layer at least includes a negative electrode active material. The negative electrode active material layer may further include at least one of a conductive additive, an electrolyte, and a binder. Examples of negative electrode active materials include metal active materials such as Li and Si, carbon active materials such as graphite, and oxide active materials such as Li₄Ti₅O₁₂. The shape of the negative electrode current collector is, for example, foil-like or mesh-like. Examples of the conductive additive, the electrolyte, and the binder are the same as those given above.

The electrolyte layer is disposed between the positive electrode active material layer and the negative electrode active material layer and at least includes an electrolyte. The electrolyte may be a solid electrolyte or a liquid electrolyte. The electrolyte layer is preferably a solid electrolyte layer. The electrolyte layer may have a binder.

The electrolyte layer preferably includes, as the solid electrolyte, at least one solid electrolyte selected from a solid electrolyte group comprising sulfide solid electrolytes, oxide solid electrolytes, and halide solid electrolytes.

The sulfide solid electrolyte preferably includes sulfur (S) as the main component of an anion element and also preferably includes, for example, an Li element, an A element, and an S element. The A element is at least one type selected from the group comprising P, As, Sb, Si, Ge, Sn, B, Al, Ga, and In. The sulfide solid electrolyte may further include at least one of O and a halogen element. Examples of the halogen element (X) include F, Cl, Br, and I. The composition of the sulfide solid electrolyte is not particularly limited, and examples thereof include xLi₂S·(100-x)P₂S₅ (70 ≤ x ≤ 80) and yLiI·zLiBr·(100-y-z)(xLi₂S·(1-x)P₂S₅) (0.7 ≤ x ≤ 0.8, 0 ≤ y ≤ 30, 0 ≤ z ≤ 30). The sulfide solid electrolyte may have the composition represented by General Formula (1) below.

Formula (1): Li₄₋ₓGe₁₋ₓPₓS₄ (0 < x < 1)

In Formula (1), at least part of Ge may be substituted with at least one selected from the group comprising Sb, Si, Sn, B, Al, Ga, In, Ti, Zr, V, and Nb. Furthermore, at least part of P may be substituted with at least one selected from the group comprising Sb, Si, Sn, B, Al, Ga, In, Ti, Zr, V, and Nb. Part of Li may be substituted with at least one selected from the group comprising Na, K, Mg, Ca, and Zn. Part of S may be substituted with a halogen. The halogen is at least one of F, Cl, Br, and I.

The oxide solid electrolyte preferably includes oxygen (O) as the main component of an anion element and may, for example, include Li, a Q element (Q represents at least one type of Nb, B, Al, Si, P, Ti, Zr, Mo, W, and S), and O. Examples of oxide solid electrolytes include garnet-type solid electrolytes, perovskite-type solid electrolytes, NASICON-type solid electrolytes, Li-P-O-based solid electrolytes, and Li-B-O-based solid electrolytes. Examples of garnet-type solid electrolytes include Li₇La₃Zr₂O₁₂, Li₇₋ₓLa₃(Zr₂₋ₓNbₓ)O₁₂ (0 ≤ x ≤ 2), and Li₅La₃Nb₂O₁₂. Examples of perovskite-type solid electrolytes include (Li, La)TiO₃, (Li, La)NbO₃, and (Li, Sr)(Ta, Zr)O₃. Examples of NASICON-type solid electrolytes include Li(Al, Ti)(PO₄)₃ and Li(Al, Ga)(PO₄)₃. Examples of Li-P-O-based solid electrolytes include Li₃PO₄ and LIPON (a compound in which part of O in Li₃PO₄ is substituted with N), and examples of Li-B-O-based solid electrolytes include Li₃BO₃ and compounds obtained by substituting part of O in Li₃BO₃ with C.

As the halide solid electrolyte, a solid electrolyte including Li, M, and X (M represents at least one of Ti, Al, and Y, and X represents F, Cl, or Br) is preferred. Specifically, Li_{6-3z}Y_{z}X₆ (X represents Cl or Br, and z satisfies 0 < z < 2) and Li_{6-(4-x)b}(Ti₁₋ₓAlₓ)_{b}F₆ (0 < x < 1, 0 < b ≤ 1.5) are preferred. Among Li_{6-3z}Y_{z}X₆, in terms of having superior lithium ion conductivity, Li₃YX₆ (X represents Cl or Br) is more preferred, and Li₃YCl₆ is even more preferred. Furthermore, it is preferred that Li_{6-(4-x)b}(Ti₁₋ₓAlₓ)_{b}F₆ (0 < x < 1, 0 < b ≤ 1.5) be included together with a solid electrolyte such as a sulfide solid electrolyte from the standpoint of inhibiting oxidative decomposition of the sulfide solid electrolyte.

The positive electrode current collector collects current for the positive electrode active material layer. Examples of positive electrode current collectors include stainless steel, aluminum, nickel, iron, titanium, and carbon, with aluminum alloy foil or aluminum foil being preferred. Aluminum alloy foil and aluminum foil may be manufactured using powder. The shape of the positive electrode current collector is, for example, foil-like or mesh-like.

The negative electrode current collector collects current for the negative electrode active material layer. Examples of materials for the negative electrode current collector include metals such as copper, SUS, and nickel. The shape of the negative electrode current collector is, for example, foil-like or mesh-like.

### · Battery Structure

The solid-state battery has a positive electrode / solid electrolyte layer / negative electrode layered structure. The solid-state battery includes what is called an all-solid-state battery which uses a solid electrolyte as the electrolyte, and the solid electrolyte may include an electrolyte solution of less than 10% by mass relative to the total amount of the electrolyte. It will be noted that the solid electrolyte may be a composite solid-state electrolyte including an inorganic solid electrolyte and a polymer electrolyte.

The positive electrode has a positive electrode active material layer and a current collector, and the negative electrode has a negative electrode active material layer and a current collector.

The solid electrolyte layer may have a single layer structure or a multilayer structure including two or more layers.

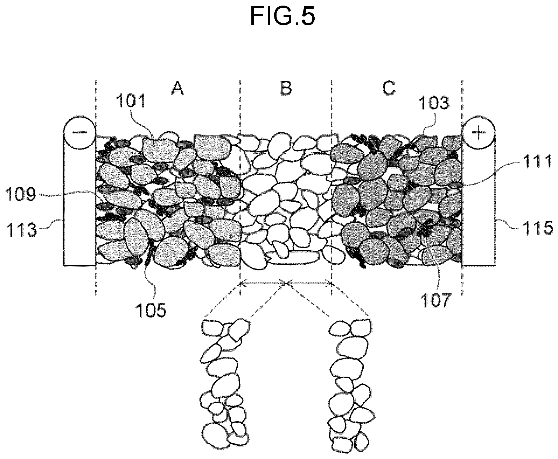

The solid-state battery may, for example, have the cross-sectional structure shown in FIG 5, and solid electrolyte layer B may have a two-layer structure as in FIG 5. FIG 5 is a schematic cross-sectional view showing an example of the solid-state battery. The solid-state battery shown in FIG 5 includes a negative electrode, which includes a negative electrode current collector 113 and a negative electrode active material layer A, a solid electrolyte layer B, and a positive electrode, which includes a positive electrode current collector 115 and a positive electrode active material layer C. The negative electrode active material layer A includes a negative electrode active material 101, a conductive additive 105, and a binder 109. The positive electrode active material layer C includes a coated positive electrode active material 103, a conductive additive 107, and a binder 111, and the surface of the positive electrode active material of the coated positive electrode active material 103 is coated with LTAF electrolyte or LiNbO₃ electrolyte.

Furthermore, the solid-state battery may be configured by sealing, with resin, stack end faces (side faces) of a stacked structure of the positive electrode / the solid electrolyte layer / the negative electrode. The current collectors of the electrodes may have a configuration where a buffer layer, an elastic layer, or a positive temperature coefficient (PTC) thermistor layer is disposed on the surface.

### · Battery

The laminated battery in the present disclosure is typically a lithium-ion secondary battery. Examples of applications for the battery include being a power source for vehicles such as hybrid electric vehicles (HEV), plug-in hybrid electric vehicles (PHEV), battery electric vehicles (BEV), gasoline vehicles, and diesel vehicles. It is particularly preferred that the battery be used as a power source for driving hybrid electric vehicles (HEV), plug-in hybrid electric vehicles (PHEV), or battery electric vehicles (BEV). Furthermore, the battery in the present disclosure may be used as a power source for moving bodies other than cars (e.g., trains, ships, airplanes) and may be used as a power source for electrical goods such as information processing devices.

The present disclosure is not limited to the above embodiment. The above embodiment is exemplary, and all other embodiments having substantially the same configurations as those of the technical thought set forth in the claims of the present disclosure and achieving the same action and effects are also included in the technical scope of the present disclosure.

## Claims

1. A laminated battery (10A) comprising:
an electrode body (2); and
a laminate film (4) that covers and seals the electrode body (2) inside,
wherein
the laminate film (4) has a fused portion (40) formed by superposing end portions of the laminate film (4) and fusing together their inner surfaces,
the fused portion (40) has three or more bend portions including two or more fold portions (40a, 40b) that are bent in angular or arcuate shapes so as to have an angle of 90° or less and one distal end-side bend portion (40c) that is bent in an angular or arcuate shape so as to have an angle less than 180° in a position closest to a distal end (400) of the fused portion (40), and
the fused portion (40) has a shape in which at least part of the distal end (400) faces the electrode body (2) side.

2. The laminated battery (10A) of claim 1, wherein the fold portions (40a, 40b) and the distal end-side bend portion (40c) are all bent in arcuate shapes.

3. The laminated battery (10A) of claims 1 or 2, wherein the position in which the distal end-side bend portion (40c) is disposed is a position closest to the bend portion that is most on a base side of the fused portion (40) among the two or more fold portions (40a, 40b).

4. The laminated battery (10A) of any one of claims 1 to 3, wherein the shortest distance (a1) between the distal end (400) of the fused portion (40) and the area of the laminate film (4) covering the electrode body (2) is 0.5 mm or more and 5 mm or less.

5. The laminated battery (10A) of any one of claims 1 to 4, wherein the fused portion (40) has, as the fold portions (40a, 40b), one folded-back bend portion (40b) that is bent in an angular or arcuate shape so as to have an angle of 20° or less and one or more right-angle bend portions (40a) that are formed on a base side of the fused portion (40) relative to the folded-back bend portion (40b) and are bent in angular or arcuate shapes so as to have an angle of 70° or more and 90°or less.

6. A method of manufacturing the laminated battery (10A) of claim 5 comprising:
a step of preparing a post-fusion laminated battery having a planar fused portion (40) formed by superposing end portions of a laminate film (4) and fusing together their inner surfaces;
a folding back and bending step of forming, in the fused portion (40) of the post-fusion laminated battery, a folded-back bend portion (40b) that is bent in an angular or arcuate shape so as to have an angle of 20° or less; and
a right-angle bending step of forming, in an area on a base side of the fused portion (40) relative to the folded-back bend portion (40b), a right-angle bend portion (40a) that is bent in an angular or arcuate shape so as to have an angle of 70° to 90°,
wherein
the right-angle bending step is a step of folding the fused portion (40) in stages to form the right-angle bend portion (40a) by conveying the fused portion (40) between roller pairs of a roller pair group including at least three fold rollers that contact a surface on a folding side of the fused portion (40) and have different contact angles relative to the fused portion (40) and opposing rollers that are provided in positions opposing the fold rollers via the fused portion (40) and are present in the same number as the fold rollers, and
the right-angle bending step is a step of forming the distal end-side bend portion (40c) by causing at least one of the fold rollers in the roller pair group to contact an area on the distal end (400) side of the fused portion (40) relative to the folded-back bend portion (40b).
